Europäisches Patentamt

European Patent Office

Office européen des brevets

(19)

(11)  **EP 0 632 616 B1**

(12)  **EUROPÄISCHE PATENTSCHRIFT**

(45) Veröffentlichungstag und Bekanntmachung des Hinweises auf die Patenterteilung:
**24.02.1999  Patentblatt 1999/08**

(51) Int Cl.⁶: **H04L 9/08**

(21) Anmeldenummer: **93110457.4**

(22) Anmeldetag: **30.06.1993**

(54) **Verfahren zur Datensicherung in einem B-ISDN Telekommunikationssystem**

Data security method in a B-ISDN telecommunications system

Procédé de sécurisation de données dans un système de télécommunications à intégration de service (RNIS) à large bande

(84) Benannte Vertragsstaaten:
**AT BE CH DE FR GB IT LI NL SE**

(43) Veröffentlichungstag der Anmeldung:
**04.01.1995  Patentblatt 1995/01**

(73) Patentinhaber: **SIEMENS AKTIENGESELLSCHAFT
80333 München (DE)**

(72) Erfinder: **Möhrmann, Karl Heinz, Dipl.-Ing.
D-81369 München (DE)**

(56) Entgegenhaltungen:
**DE-A- 3 939 828**

- **PROCEEDINGS OF THE IEEE/IEICE GLOBAL TELECOMMUNICATIONS CONFERENCE 1987 15-18 November 1987, Tokyo (JP) NEW YORK (US) Seiten 1439-1443, XP000043860 N.TOKURA ET AL.: "A BROADBAND SUBSCRIBER NETWORK USING OPTICAL STAR COUPLERS"**
- **JOURNAL OF LIGHTWAVE TECHNOLOGY Bd. 7, Nr. 11 , November 1989 , NEW YORK US Seiten 1752 - 1758 XP000104010 I.M.MACGREGOR ET AL. 'IMPLEMENTATION OF A TDM PASSIVE OPTICAL NETWORK FOR SUBSCRIBER LOOP APPLICATIONS'**
- **RUNDFUNK TECHNISCHE MITTEILUNGEN, Bd. 29, Nr. 6, November 1985, NORDERSTEDT DE, Seiten 298 - 303 DANILENKO 'Ein kryptographisches Systemkonzept für Pay-TV mit dezentraler Schlüsselverwaltung'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

In mit passiven Faserverzweigern gebildeten optischen Doppel-Stern-Netzen, in denen jede dezentrale Telekommunikationseinrichtung die von der zentralen Telekommunikationseinrichtung ausgesendeten Downstream-Informationen empfängt und daraus nur die für sie bestimmten Informationen zwecks Weitergabe an den (die) angeschlossenen Teilnehmer aussortiert, besteht grundsätzlich die Möglichkeit eines Zugriffs auf Informationen, die für andere Teilnehmer bestimmt sind, die an andere dezentrale Telekommunikationseinrichtungen angeschlossen sind.

Um dem zu begegnen, ist es für ein Telekommunikationssystem, in dem eine Mehrzahl von Teilnehmerstellen mit Lichtwellenleiter-Teilnehmeranschlußleitungen über eine oder mehrere optische Verzweigereinrichtung(en) an eine mit einer Vermittlungsstelle verbundene Lichtwellenleiter-Anschlußleitung angeschlossen sind, wobei an einer optischen Verzweigereinrichtung eine oder mehrere Teilnehmerstellen angeschlossen sein können, schon (aus DE-C2-39 25 605) bekannt, daß in den Teilnehmerstellen jeweils eine Schaltung vorgesehen ist, die während des Verbindungsaufbaus zwischen Teilnehmerstelle und Vermittlungsstelle einen Kodierschlüssel initiiert und diesen zur Vermittlungsstelle sendet, wonach die von der Vermittlungsstelle zur Teilnehmerstelle zu übertragenden Digitalsignale mit diesem Kodierschlüssel verschlüsselt gesendet werden.
Diese bekannte Lösung, die prinzipiell auch bei Übertragung von ATM-Zellen funktioniert, schließt indessen damit, daß zu Beginn der Übertragung der zu verwendende Schlüssel von der dezentralen Telekommunikationseinrichtung zur zentralen Einrichtung hin übertragen wird, nicht mit Sicherheit aus, daß ein Unbefugter, der auf irgendeine Weise absichtlich oder auch nur unabsichtlich - und sei es auch nur durch eine Fehlfunktion der elektronischen Einrichtungen im Netz - Zugriff zu diesem Schlüssel erlangt, auch die damit verschlüsselten Downstream-Signale entschlüsseln kann. Unabhängig davon wächst die Gefahr einer unbefugten Entschlüsselung auch dann, wenn eine Verbindung (wie beispielsweise eine Standverbindung) lange besteht, da der Angreifer dann hinreichend Zeit

Aus RUNDFUNKTECHNISCHE MITTEILUNGEN, Bol 29, Nr 6, Nov. 1985, NORDERSTEDT DE, 'Ein krysptographisches Systemkonzept für Pay-TV mit dezentraler Schlüsselverurualtung' DANILENKO, ist ein Verfahren zum Austausch von chiffrierten Informationen unter zwei Teilnehmern eines öffentlichen Informationssystems bekannt. Bei diesen Verfahren generiert jeder Teilnehmer seinen persönlichen Codeschlüssel, der aus zwei Teilen besteht : aus einem geheingehaltenen privaten Schlüssel und einem öffentlichen Schlüssel. Der Pöffentliche Schlüssel dient zur Chiffrierung von Nachrichten. Der private Schlüssel dient der Dechiffrierung von Nachrichten.

Eine wirkungsvollere Sicherung eines passiven optischen Telekommunikationssystems gegen unberechtigten Zugriff auf die darin übertragenen Digitalsignale bietet ein (aus DE-C1-42 04 461 bekanntes) Verfahren zur Datensicherung in einem Telekommunikationssystem mit einer zentralen Telekommunikationseinrichtung und einer Mehrzahl von dezentralen Telekommunikationseinrichtungen, die jeweils über eine eigene Lichtwellenleiter-Anschlußleitung mit einem optischen Verzweiger verbunden sind, der direkt oder über wenigstens einen weiteren optischen Verzweiger mit einem gemeinsamen Lichtwellenleiteranschluß der zentralen Telekommunikationseinrichtung über einen Lichtwellenleiter-Bus verbunden ist, wobei die Signalübertragung von der zentralen Telekommunikationseinrichtung aus zu den dezentralen Einrichtungen hin in einem Multiplexrahmen oder in einem ATM-Zellenstrom vor sich geht und die Signalübertragung von den dezentralen Telekommunikationseinrichtungen aus zur zentralen Einrichtung hin jeweils in einem der jeweiligen dezentralen Einrichtung zugeordneten Zeitkanal des Multiplexrahmens vorzugsweise unter adaptiver Steuerung der Zeitlage des Zeitkanals in einem TDMA-Verfahren bzw. mittels ATM-Zellen in einem TDMA-Verfahren vor sich geht; diesem Verfahren zufolge wird aus einem in einer dezentralen Telekommunikationseinrichtung vorgegebenen geheimen Schlüssel ein öffentlicher Schlüssel ermittelt, der in Aufwärtsrichtung zu der zentralen Telekommunikationseinrichtung übermittelt wird, wo er zum Verschlüsseln von (Sekundärschlüssel-) Informationen zur Anpassung der dezentralen Einrichtung an in der zentralen Einrichtung für diese dezentrale Einrichtung individuell vorgesehene, wiederholt geänderte Übertragungsmodalitäten benutzt wird.

Die Problematik eines unberechtigten Zugriffs auf in einem Telekommunikationssystem übertragene Digitalsignale besteht indessen nicht nur in Passiven Optischen Netzen (PON) der im vorstehenden umrissenen Art, sondern stellt sich in der Telekommunikationstechnik ganz allgemein, und die Erfindung zeigt nun einen Weg zu einer wirkungsvollen Sicherung des Telekommunikationsverkehrs zweier Teilnehmer eines Digital-Telekommunikationssystems, insbesondere B-ISDN-Telekommunikationssystems, gegen unberechtigten Zugriff auf die darin übertragenen Digitalsignale.

Die Erfindung betrifft ein Verfahren zur Datensicherung in einem eine Mehrzahl von Teilnehmereinrichtungen umfassenden Digital-Telekommunikationssystem, insbesondere B-ISDN-Telekommunikationssystem, in dem die Signalübertragung mittels ATM-Zellen vor sich geht; dieses Verfahren ist erfindungsgemäß dadurch gekennzeichnet, daß aus einem in einer Teilnehmereinrichtung vorgegebenen geheimen Schlüssel ein öffentlicher Schlüssel ermittelt wird, der zu einer an einer Verbindung mit der Teilnehmereinrichtung beteiligten anderen Teilnehmereinrichtung übermittelt wird, wo er zum Verschlüsseln von (Sekundärschlüssel-)Informationen zur Anpassung der genannten einen Teilnehmereinrichtung an in der genannten anderen Teilnehmereinrichtung für die genannte eine Teilnehmereinrichtung vorgesehene, wiederholt geänderte Übertragungsmodalitäten benutzt wird.

Die Erfindung, die sich bei der Verschlüsselung der Übertragungsmodalitäten-Information eines sog. Public-Key-Systems bedient, bringt den Vorteil mit sich, auf einen Austausch geheimer Schlüssel verzichten zu können und dennoch eine hohe Sicherheit der von der genannten anderen Teilnehmereinrichtung aus zu der genannten einen Teilnehmereinrichtung hin übertragenen Digitalsignale gegen unberechtigten Zugriff und Mithören zu gewährleisten, selbst wenn es sich um relativ lange bestehende Verbindungen (insbes. Standverbindungen) oder auch asymmetrische Verbindungen mit unterschiedlichen Datenraten in den beiden Übertragungsrichtungen handelt. Der erforderliche Rechenaufwand für ein Public-Key-Verfahren ist im Prinzip zwar hoch; da die verschlüsselte Mitteilung neuer Übertragungsmodalitäten aber nur gelegentlich, nämlich im Zusammenhang mit einer von der genannten anderen Teilnehmereinrichtung in gewissen zeitlichen Abständen durchgeführten Änderung solcher Modalitäten, notwendig ist, sind die Errechnung der Schlüssel und die Verschlüsselung nicht zeitkritisch, so daß sie mit einem relativ einfachen Rechenwerk off-line per Software bewirkt werden können.

Es sei an dieser Stelle bemerkt, daß es (aus PATENTS ABSTRACTS OF JAPAN, E-429, 19.08.1986, Vol. 10, No. 240 (JP-A-61-72 437)) bekannt ist, daß zur Telekommunikation zwischen dezentralen Kommunikationseinrichtungen diese öffentliche und geheime Schlüssel verwenden, wobei die dezentralen Kommunikationseinrichtungen die öffentlichen Schlüssel ihrer Kommunikationspartner von einer zentralen Schlüsselmanagementeinrichtung abrufen, die dabei individuelle Kennungen der dezentralen Einrichtungen verschlüsselt.

Nähere Berührungspunkte mit der vorliegenden Erfindung sind nicht gegeben.

Zur eigentlichen Sicherung des laufenden Digitalsignalstroms kann in weiterer Ausgestaltung der Erfindung die Anfangsstellung und ggf. auch die Struktur eines in der genannten anderen Teilnehmereinrichtung vorgesehenen Scramblers und eines in der genannten einen Teilnehmereinrichtung vorgesehenen Descramblers zu Rahmenbeginn wiederholt geändert werden, indem die genannte andere Teilnehmereinrichtung mittels eines Zufallszahlengenerators jeweils eine zufällige neue Anfangsstellung und/oder Struktur für den Scrambler ermittelt und die zugehörige Anfangsstellung und/oder Struktur des zugehörigen Descramblers mit einem von der genannten einen Teilnehmereinrichtung übermittelten öffentlichen Schlüssel verschlüsselt der betreffenden Teilnehmereinrichtung mitteilt, die diese Mitteilung mit dem zugehörigen geheimen Schlüssel entschlüsselt, wonach die Änderung von einem bestimmten Pulsrahmen an durchgeführt wird.

Mit anderen Worten: Bei Übertragung von ATM-Zellen wird das in der Zelle enthaltene Nutzsignal in der sendenden Teilnehmereinrichtung verscrambelt, und nur die das Ziel der ATM-Zelle bildende Teilnehmereinrichtung weiß, wie das Signal zu descrambeln ist, da die zu Beginn des Nutzinformationsteils (payload) der Zelle erforderliche Anfangsstellung und ggf. auch die Struktur des Scramblers nur ihr verständlich verschlüsselt mitgeteilt wurden. Zur weiteren Verbesserung der Datensicherheit gegen einen Angriff auf den geheimen Schlüssel kann in weiterer Ausgestaltung der Erfindung eine Teilnehmereinrichtung nach einer bestimmten Anzahl von Pulsrahmen einen von ihr errechneten neuen öffentlichen Schlüssel der jeweils anderen Teilnehmereinrichtung übermitteln, die ihrerseits wiederum nach Ermittlung einer neuen Scrambler-Anfangsstellung und/oder Struktur und neuem Verschlüsseln der jeweils zugehörigen Descrambler-Anfangsstellung und/oder Struktur der jeweils einen Teilnehmereinrichtung individuell die Änderung der Anfangsstellung und/oder Struktur mitteilt, die danach von einem bestimmten Pulsrahmen an durchgeführt wird.

Die Erfindung wird nachfolgend noch weiter erläutert.

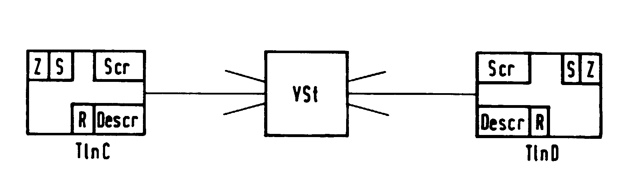

In der Zeichnung ist schematisch in einem zum Verständnis der Erfindung erforderlichen Umfang ein bidirektionales Telekommunikationssystem dargestellt, das sich zwischen einer zentralen Telekommunikationseinrichtung VSt, beispielsweise einer Vermittlungsstelle, und einer Mehrzahl von Teilnehmerstellen ..., TlnC, TlnD, ... erstreckt.

In dem skizzierten Telekommunikationssystem kann, wie dies an sich bekannt ist, die Signalübertragung mit ATM-Zellen vor sich gehen. Jede (53 Bit-Oktetts umfassende) ATM-Zelle besteht aus einem (5-Oktett-)Steuerinformationsfeld (Header) und einem (48 Oktetts umfassenden) Nutzinformationsfeld. Teil des Headers ist der (16 Bits umfassende) sog. Virtual Path Identifier; ein anderer Teil des Headers ist das sog. Access Control Field.

In den ATM-Zellenstrom können, wenn gerade keine Nutzinformation zu übertragen ist, Synchronisierzellen mit vorgegebenem Bitmuster zur Synchronisation der Teilnehmerstellen auf den jeweiligen Zellenanfang eingeblendet sein (sog. pure ATM); es ist aber auch möglich, daß der ATM-Zellenstrom seinerseits in eine (z.B. STM-1-)Zeitrahmenstruktur mit in bestimmten festen Abständen auftretenden Synchronisiersignalen (Overhead) eingebettet ist (sog. frame structured ATM).

Aus dem ATM-Zellenstrom entnimmt jede Teilnehmereinrichtung nur diejenigen ATM-Zellen, die in ihrem Header, vorzugsweise in dessen Virtual Path Identifier, mit einer eben dieser Teilnehmereinrichtung zugeordneten Kennzeichnung adressiert sind.

Wie in der Zeichnung angedeutet ist, sind die Teilnehmereinrichtungen ..., TlnC, TlnD, ... jeweils mit einem Descrambler Descr versehen, der das für die betreffende Teilnehmereinrichtung (z.B. TlnD) bestimmte, in einer mit ihr gerade in Verbindung stehenden anderen Teilnehmereinrichtung (im Beispiel TlnC) verscrambelte Digitalsignal entscrambelt. Die Teilnehmereinrichtungen TlnC, TlnD weisen zum Verscrambeln einen Scrambler Scr auf. Dieser muß, ebenso wie der Scrambler, nicht in Hardware realisiert sein, sondern kann auch mittels Software realisiert sein.

Das Verscrambeln kann z.B. in Form einer fortlaufenden mod-2-Addition der Informationsbits mit einer zufallsähnlichen Bitfolge vor sich gehen; für die Erzeugung solcher Bitfolgen gibt es vielfältige Möglichkeiten, so daß es hier weiterer Erläuterungen dazu nicht bedarf. Scrambler und Descrambler werden wiederholt verändert; dazu wird die notwendige Anfangsstellung für den Descrambler Descr einer Teilnehmereinrichtung TlnD bzw. TlnC jeweils rechtzeitig von der mit ihr gerade in Verbindung stehenden anderen Teilnehmereinrichtung TlnC bzw. TlnD mit einem sog. Public Key verschlüsselt mitgeteilt. Hierzu geben sich die Teilnehmereinrichtungen TlnD bzw. TlnC einen geheimen Schlüssel vor und ermitteln dazu einen öffentlichen Schlüssel, was jeweils mit einem in den Teilnehmereinrichtungen Tln vorgesehenen Rechner R geschehen kann. Mit dem zur Gegen-Teilnehmereinrichtung TlnC bzw. TlnD hin übertragenen öffentlichen Schlüssel verschlüsselt wird die genannte Information über die Anfangsstellung des Decramblers Descr gewissermaßen als eine Sekundärschlüsselinformation von der Gegen-Teilnehmerinrichtung TlnC bzw. TlnD ausgesendet; entschlüsselt werden kann diese Information über die geänderten Ubertragungsmodalitäten nur mit dem zugrunde liegenden geheimen Schlüssel und damit nur von derjenigen Teilnehmereinrichtung TlnD bzw. TlnC, für die die betreffende Information bestimmt ist.

Public-Key-Verfahren sind an sich (z.B. aus ntz 38 (1985) 9, 636...638 bekannt; sie verwenden zur Schlüsselbildung sog. one-way-Funktionen. Bei one-way-Funktionen handelt es sich um Funktionen, deren Funktionswert relativ einfach zu berechnen ist, während die Berechnung der Inversen kaum möglich ist. "Einfach" und "kaum möglich" meint dabei den rechnerischen Aufwand und hängt somit vom Entwicklungsstand der jeweiligen Computergeneration ab. (Jansen, Pohlmann: "Kryptographie in der Telematik", ntz 38 (1985)9, 636...638):

So beruht ein bekanntes Public-Key-Verfahren beispielsweise darauf, daß es ganz einfach ist, durch Multiplikation einer Anzahl von Primzahlen eine große natürliche Zahl zu errechnen, daß es aber kaum möglich ist, diese große natürliche Zahl wieder in ihre Primfaktoren zu zerlegen (Rivest, Shamir, Adleman: "A method for obtaining digital signatures and public-key cryptosystems", Communications of the ACM 21(1978)2, 120...126). Bei diesem bekannten Verfahren wird aus einem Klartext M ein Schlüsseltext C durch eine mathematische

$$\text{Transformation } C = M^e \text{ (mod n)}$$

erhalten. Die inverse Transformation, mit der man aus dem Schlüsseltext wieder den Klartext erhält, lautet

$$M = C^d \text{ (mod n).}$$

M ist eine positive ganze Zahl, die zwischen 0 und n-1 liegen muß. Es ergeben sich dann die Schlüsselpaare

(e,n) für den öffentlichen Schlüssel und
(d,n) für den geheimen Schlüssel.

Bei der Errechnung der Schlüssel wird zunächst n als Produkt aus zwei sehr großen, frei gewählten Primzahlen p und q berechnet (diese Zahlen werden mittels eines Zufallszahlengenerators erzeugt und bleiben geheim):

$$n = p.q, \text{ mit p ungleich q.}$$

Da es zu enormen Schwierigkeiten führt, umgekehrt aus n die Primzahlen p und q zu ermitteln, kann n als Bestandteil des öffentlichen Schlüssels bekanntgegeben werden.

Als geheimer Schlüssel d wird eine große (in ernsthaften Anwendungen ca. 100stellige), frei gewählte ganze Zahl verwendet, die relativ prim zu (p-1)•(q-1) sein muß. Hat man so p, q und d bestimmt, so läßt sich der öffentliche Schlüssel e durch "Inverse Multiplikation":

$$e.d \text{ (mod(p-1)•(q-1)) = 1}$$

erzeugen. Für Primzahlerzeugung und Schlüsselgenerierung existieren spezielle mathematische Algorithmen. Auf Grund der komplexen Rechenvorgänge ist die mögliche Durchsatzrate allerdings gering (einige zig bit/s).

Die Anfangsstellung des in einer Teilnehmereinrichtung TlnC, TlnD vorgesehenen Scramblers Scr und des in der jeweiligen Gegen-Teilnehmereinrichtung TlnD bzw. TlnC vorgesehenen Descramblers Descr kann wiederholt geändert werden, indem die betreffende Teilnehmereinrichtung TlnC, TlnD mittels eines Zufallszahlengenerators Z jeweils eine zufällige neue Anfangsstellung für den Scrambler Scr ermittelt und die jeweils zugehörige Anfangsstellung des zugehörigen Descramblers Descr mit dem öffentlichen Schlüssel verschlüsselt der Gegen-Teilnehmereinrichtung TlnD bzw. TlnC mitteilt; dort wird diese Mitteilung mit dem zugehörigen geheimen Schlüssel entschlüsselt, wonach die Änderung von einem bestimmten Pulsrahmen an durchgeführt wird.

Die Gegen-Teilnehmereinrichtung TlnD bzw. TlnC kann ebenfalls in gewissen Zeitabständen neue Schlüssel errechnen und den von ihr errechneten neuen öffentlichen Schlüssel der mit ihr in Verbindung stehenden Teilnehmereinrichtung TlnC bzw. TlnD übermitteln; diese Teilnehmereinrichtung TlnC bzw. TlnD kann dann nach Ermittlung einer neuen Scrambler-Anfangsstellung die zugehörige Descrambler-Anfangsstellung mit dem neuen öffentlichen Schlüssel verschlüsseln und der betreffenden Gegen-Teilnehmereinrichtung TlnD bzw. TlnC die Änderung der Anfangsstellung mitteilen, die dann wiederum von einem bestimmten Pulsrahmen an durchgeführt wird. Nicht nur die Anfangseinstellung, sondern auch die Struktur von Scrambler und Descrambler können zur Erschwerung unbefugten Mithörens in regelmäßigen oder unregelmäßigen Zeitabständen verändert werden.

Die in der Zeichnung in den Teilnehmereinrichtungen TlnC, TlnD angedeuteten Schlüsseleinrichtungen S als solche können in an sich bekannter Weise in Form digitaler Rechenwerke ausgeführt sein, so daß weitere Erläuterungen dazu an dieser Stelle nicht erforderlich sind; das gleiche gilt auch für den in den Teilnehmereinrichtungen TlnC, TlnD angedeuteten Zufallszahlengenerator Z.

Abschließend sei noch folgendes bemerkt: Wird die Erfindung in einem passiven optischen Telekommunikationssystem eingesetzt, in dem einem eingangs erwähnten (aus DE-C1-42 04461 bekannten) Verfahren zufolge die Anfangsstellung und/oder die Struktur von in einer zentralen Telekommunikationseinrichtung vorgesehenen, dezentralen Einrichtungen zugeordneten Scramblern und von in den dezentralen Einrichtungen vorgesehenen Descramblern zu Rahmenbeginn wiederholt geändert wird, indem die zentrale Kommunikationseinrichtung mittels eines Zufallszahlengenerators jeweils eine zufällige neue Anfangsstellung und/oder Struktur für die den einzelnen dezentralen Einrichtungen zugeordneten Scrambler ermittelt und die zugehörige Anfangsstellung und/oder Struktur des zugehörigen Descramblers mit einem von der jeweiligen dezentralen Einrichtung übermittelten öffentlichen Schlüssel verschlüsselt der betreffenden dezentralen Einrichtung mitteilt, die diese Mitteilung mit dem zugehörigen geheimen Schlüssel entschlüsselt, wonach die Änderung von einem bestimmten Pulsrahmmen an durchgeführt wird, so könnte es in seltenen Fällen passieren, daß ein für die Übertragung im passiven optischen Telekommunikationssystem vorgesehener zusätzlicher Scrambler die Wirkung des gemäß der vorliegenden Erfindung vorgesehenen Scramblers gerade aufhebt. Dies kann einerseits dadurch vermieden werden, daß bereits verscrambelte ATM-Zellen besonders (z.B. an geeigneter Stelle im Header, in den ersten Bytes des Informationsfeldes, durch eine Ausscheidekennziffer im VPI-Feld o.ä.) gekennzeichnet und im passiven optischen Telekommunikationssystem nicht nochmals verscrambelt werden; da andererseits der Teilnehmer im allgemeinen weiß, daß er von der Gegenseite verscrambelte Informationen erhalten soll, kann alternativ auch durch eine vom Teilnehmer ausgehende Mitteilung das nochmalige Scrambeln im passiven optischen Telekommunikationssystem unterbunden werden.

**Patentansprüche**

1. Verfahren zur Datensicherung in einem eine Mehrzahl von Teilnehmereinrichtungen (TlnC, TlnD) umfassenden Digital-Telekommunikationssystem, insbesondere B-ISDN-Telekommunikationssystem, in dem die Signalübertragung mittels ATM-Zellen vor sich geht,
**dadurch gekennzeichnet,**
daß aus einem in einer Teilnehmereinrichtung (TlnD) vorgegebenen geheimen Schlüssel ein öffentlicher Schlüssel ermittelt wird, der zu einer an einer Verbindung mit der Teilnehmereinrichtung (TlnD) beteiligten anderen Teilnehmereinrichtung (TlnC) übermittelt wird, wo er zum Verschlüsseln von Sekundärschlüssel-Informationen zur Anpassung der genannten einen Teilnehmereinrichtung (TlnD) an in der genannten anderen Teilnehmereinrichtung (TlnC) für die genannte eine Teilnehmereinrichtung (TlnD) vorgesehene, wiederholt geänderte Übertragungsmodalitäten benutzt wird.

2. Verfahren nach Anspruch 1,
**dadurch gekennzeichnet,**
daß die Anfangsstellung und/oder die Struktur eines in der genannten anderen Teilnehmereinrichtung (TlnC) vorgesehenen Scramblers (Scr) und eines in der genannten einen Teilnehmereinrichtung (TlnD) vorgesehenen Descramblers (Descr) zu Rahmenbeginn wiederholt geändert wird, indem die genannte andere Teilnehmereinrichtung (TlnC) mittels eines Zufallszahlengenerators jeweils eine zufällige neue Anfangsstellung und/oder Struktur für den Scrambler (Scr) ermittelt und die zugehörige Anfangsstellung und/oder Struktur des zugehörigen Descramblers (Descr) mit einem von der genannten einen Teilnehmereinrichtung (TlnD) übermittelten öffentlichen Schlüssel verschlüsselt der betreffenden Teilnehmereinrichtung (TlnD) mitteilt, die diese Mitteilung mit dem zugehörigen geheimen Schlüssel entschlüsselt, wonach die Änderung von einem bestimmten Pulsrahmen an durchgeführt wird.

3. Verfahren nach Anspruch 2,
**dadurch gekennzeichnet,**
daß eine Teilnehmereinrichtung (TlnD) nach einer bestimmten Anzahl von Pulsrahmen einen von ihr errechneten neuen öffentlichen Schlüssel der jeweils anderen Teilnehmereinrichtung (TlnC) übermittelt, die ihrerseits wiederum nach Ermittlung einer neuen Scrambler-Anfangsstellung und/oder Struktur und neuem Verschlüsseln der jeweils zugehörigen Descrambler-Anfangsstellung und/oder Struktur der jeweils einen Teilnehmereinrichtung. (TlnD) individuell die Änderung der Anfangsstellung und/oder Struktur mitteilt, die danach von einem bestimmten Pulsrahmen an durchgeführt wird.

## Claims

1. Method for data protection in a digital telecommunications system which comprises a plurality of subscriber devices (TlnC, TlnD), in particular a B-ISDN telecommunications system in which the signals are transmitted by means of ATM cells, characterized in that a public key is determined from a secret key which is specified in a subscriber device (TlnD) and is transmitted to another subscriber device (TlnC) which is involved in a link with the subscriber device (TlnD), in which other subscriber device (TlnC) it is used to encrypt secondary-key information in order to match the said one subscriber device (TlnD) to transmission modalities which are changed repeatedly and are provided in the said other subscriber device (TlnC) for the said one subscriber device (TlnD).

2. Method according to Claim 1, characterized in that, the initial position and/or the structure of a scrambler (Scr) which is provided in the said other subscriber device (TlnC) and of a descrambler (Descr) which is provided in the said one subscriber device (TlnD) is changed repeatedly at the start of a frame, in that the said other subscriber device (TlnC) in each case uses a random number generator to determine a random new initial position and/or structure for the scrambler (Scr) and reports the associated initial position and/or structure of the associated descrambler (Descr) in encrypted form to the relevant subscriber device (TlnD) using a public key which is transmitted from the said one subscriber device (TlnD), which subscriber device (TlnD) decrypts this message using the associated secret key, after which the change is carried out starting from a specific pulse frame.

3. Method according to Claim 2, characterized in that, after a specific number of pulse frames, a subscriber device (TlnD) transmits a new public key, which has been calculated by it, to the respective other subscriber device (TlnC) which, for its part, in turn and after determining a new scrambler initial position and/or structure and newly encrypting the respective associated descrambler initial position and/or structure of the respective one subscriber device (TlnD), individually reports the change to the initial position and/or structure, which is carried out after this, starting from a specific pulse frame.

## Revendications

1. Procédé pour obtenir la sécurité des données dans un système de télécommunication numérique, comprenant une pluralité de dispositifs (TlnC, TlnD) d'abonné, notamment dans un système de télécommunication à intégration de service (RNIS) à large bande, dans lequel la transmission de signaux s'effectue au moyen de cellules (ATM),
caractérisé en ce que,
on détermine à partir d'une clé secrète prescrite dans un dispositif (TlnD) d'abonné une clé publique qui est transmise à un autre dispositif (TlnC) d'abonné qui participe à une liaison avec le premier dispositif (TlnD) d'abonné et dans lequel elle est utilisée pour le codage d'information de clé secondaire servant à adapter ledit premier dispositif (TlnD) d'abonné à des modalités de transmission modifiées de manière réitérée, prévus dans ledit autre dispositif (TlnC) d'abonné pour ledit dispositif (TlnD) d'abonné.

2. Procédé suivant la revendication 1,
caractérisé en ce que,
la position initiale et/ou la structure d'un brouilleur (Scr) prévu dans ledit autre dispositif (TlnC) d'abonné et d'un débrouilleur (Descr) prévu dans ledit premier dispositif (TlnD) d'abonné est modifiée de manière répétée en début de trame par le fait que ledit autre dispositif (TlnC) d'abonné détermine, au moyen d'un générateur de nombres aléatoires, chaque fois une nouvelle position initiale aléatoire et/ou une nouvelle structure aléatoire pour le brouilleur (Scr) et communique la position initiale associée et/ou la structure du débrouilleur (Descr) associée, de manière codée par une clé publique transmise par ledit premier dispositif (TlnD) d'abonné, au dispositif (TlnD) d'abonné concerné qui décode cette communication par la clé publique associée, la modification étant ensuite effectuée à partir d'une certaine trame d'impulsion.

3. Procédé selon la revendication 2,
caractérisé en ce que
un dispositif (TlnD) d'abonné transmet, aprés un nombre déterminé de trame d'impulsions, une nouvelle clé publique déterminée par lui à l'autre dispositif (TlnC) d'abonné qui, pour sa part, après détermination d'une nouvelle position initiale du brouilleur et/ou d'une nouvelle structure et après codage de la position initiale associée du débrouilleur et/ou de la structure, communique au premier dispositif (TlnD) d'abonné de manière individuelle la modification de la position initiale et/ou de la structure qui est ensuite effectuée à partir d'une trame d'impulsions déterminée.

| Z | S | | Scr |
|---|---|---|---|
| | | R | Descr |

TlnC

VSt

| Scr | | S | Z |
|---|---|---|---|
| Descr | R | | |

TlnD